# EUROPÄISCHE PATENTSCHRIFT

(11) **EP 3 571 737 B1**
(45) Veröffentlichungstag und Bekanntmachung des Hinweises auf die Patenterteilung: **10.05.2023**
(21) Anmeldenummer: 17836015.2
(22) Anmeldetag: 19.12.2017
(51) Int. Cl.: H01M 10/42, H01M 10/48, H01M 50/583

(54) **SYSTEM ZUR DAUERHAFTEN MARKIERUNG WENIGSTENS EINER BATTERIEKOMPONENTE**
SYSTEM FOR PERMANENTLY MARKING AT LEAST ONE BATTERY COMPONENT
SYSTÈME DE MARQUAGE PERMANENT D'AU MOINS UN COMPOSANT DE BATTERIE

(30) Priorität: 17.01.2017 DE 102017100772
(43) Veröffentlichungstag der Anmeldung: 27.11.2019
(73) Patentinhaber: INTILION GmbH, 08056 Zwickau (DE)
(72) Erfinder: WINKLER, Norman, 08412 Werdau (DE); NAWRATH, Thomas, 08056 Zwickau (DE)
(74) Vertreter: Bals & Vogel Patentanwälte PartGmbB
(86) Internationale Anmeldenummer: PCT/EP2017/083553
(87) Internationale Veröffentlichungsnummer: WO 2018/134015

(56) Entgegenhaltungen:
- US-A- 5 963 018
- US-A1- 2015 140 379
- US-A1- 2016 013 827

## Beschreibung

Die vorliegende Erfindung betrifft ein System zur dauerhaften Markierung wenigstens einer Batteriekomponente. Ferner bezieht sich die Erfindung auf eine Batteriekomponente sowie ein Verfahren zur dauerhaften Markierung wenigstens einer Batteriekomponente.

Es ist aus dem Stand der Technik bekannt, dass bei wiederaufladbaren Batterien kritische Zustände erkannt werden müssen, und als Reaktion hierauf geeignete Maßnahmen durchgeführt werden, um eine Gefährdung und/oder Beschädigung zu verhindern. Hierzu werden häufig Batteriemanagementsysteme (BMS) eingesetzt, um insbesondere große Batterien (d. h. auch Batteriesysteme) zu überwachen. Die hierzu genutzten Funktionen sind dabei meist als sicherheitskritisch einzustufen. Dies ist bspw. bei der Detektion der Lebensdauer der Batterie, insbesondere einer Batteriekomponente, der Fall. Wird ein Lebensdauerende der (gesamten) Batterie oder einer Komponente der Batterie festgestellt, so muss gewährleistet sein, dass die Batterie bzw. Batteriekomponente außer Betrieb gesetzt wird. Daher muss bspw. durch das BMS eine entsprechende Information zuverlässig gespeichert und bei dem Betrieb der Batterie nutzbar sein. Die Dokumente US2015/140379 und US5963018 offenbaren Batteriemodule mit verschiedenen Markierungselementen.

Nachteilhaft bei den bekannten Lösungen zur Durchführung derartiger Funktionen ist, dass diese Information der Außerbetriebnahme oft nur technisch aufwendig und komplex erhalten bleiben kann. Bspw. muss bei einem Wechsel des BMS eine umfangreiche und fehleranfällige Übertragungsprozedur der Information auf das neue BMS erfolgen. Dies ist häufig zeitaufwändig, unflexibel und/oder kostenaufwändig.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte und/oder einfachere und/oder zuverlässigere Möglichkeit zur Bestimmung und/oder Erhaltung einer Markierung einer Batteriekomponente vorzuschlagen. Die voranstehende Aufgabe wird gelöst durch ein System mit den Merkmalen des Anspruchs 1, durch eine Batteriekomponente mit den Merkmalen des Anspruchs 10 sowie durch ein Verfahren mit den Merkmalen des Anspruchs 11. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen System beschrieben sind, selbstverständlich auch im Zusammenhang mit der erfindungsgemäßen Batteriekomponente sowie dem erfindungsgemäßen Verfahren, und jeweils umgekehrt, so dass bzgl. der Offenbarung zu den einzelnen Erfindungsaspekten stets wechselseitig Bezug genommen wird bzw. werden kann.

Die Aufgabe wird insbesondere gelöst durch ein System zur dauerhaften Markierung wenigstens einer Batteriekomponente, aufweisend:
- wenigstens ein Markierungselement, welches der Batteriekomponente zugeordnet ist, und welches insbesondere in der Batteriekomponente integriert ist und/oder fest mit der Batteriekomponente verbunden ist,
- ein Batteriemanagementsystem zum Betreiben der Batteriekomponente in Abhängigkeit von einem Zustand des Markierungselements,
- wenigstens eine Markierungsvorrichtung (insbesondere des Batteriemanagementsystems), welche elektrisch mit dem Markierungselement derart verbindbar und/oder verbunden ist, dass durch die Markierungsvorrichtung (insbesondere in Abhängigkeit von einem Überwachen der Batteriekomponente durch das Batteriemanagementsystem) ein dauerhafter (insbesondere permanenter) Wechsel des Zustands des Markierungselements (insbesondere zur Markierung) durchführbar ist.

Insbesondere ist dabei das Markierungselement außerhalb des Batteriemanagementsystems vorgesehen, sodass das Betreiben der Batteriekomponente (insbesondere durch das oder wenigstens ein weiteres Batteriemanagementsystem) dauerhaft durch den Wechsel des Zustands (des Markierungselements) anpassbar ist, insbesondere über einen Wechsel und/oder Neustart des Batteriemanagementsystems (BMS) hinaus. Dies hat den Vorteil, dass auch bei einem Wechsel des BMS die Markierung, welche anhand des Zustands des Markierungselements erfassbar ist, dauerhaft erhalten bleibt. Insbesondere indiziert dabei der Zustand des Markierungselements, d. h. die Markierung, eine Information, ob die Batteriekomponente betrieben werden darf oder nicht, insbesondere ob ein Defekt bei der Batteriekomponente vorliegt oder nicht. Vorzugsweise kann dabei auf eine aufwendige Übertragung dieser Information von einem zu wechselnden BMS zu einem neuen BMS verzichtet werden, da die Information außerhalb des BMS hinterlegt ist.

Bevorzugt wird dabei unter einem "dauerhaften" Erhalten der Markierung und/oder einem "dauerhaften Wechsel des Zustands" verstanden, dass der Zustand bzw. die Markierung auch nach einem Wechsel des BMS erhalten bleibt. Im engeren Sinne wird außerdem darunter verstanden, dass der Zustand bzw. die Markierung in der Batteriekomponente vorgesehen und/oder festgelegt wird, bzw. in der Batteriekomponente inhärent vorgesehen ist.

Vorzugsweise ist die Batteriekomponente als wenigstens eine Batteriezelle oder als Zellstack einer wiederaufladbaren Batterie oder als die gesamte wiederaufladbare Batterie (d. h. insbesondere das Batteriesystem oder Batteriemodul) ausgeführt oder weist diese jeweils auf. Die Batterie kann dabei insbesondere ein oder mehrere Batteriekomponenten aufweisen, oder selbst die Batteriekomponente bilden. Bspw. kann die Batterie als eine wiederaufladbare Batterie, insbesondere als eine Lithium-Ionen-Batterie, ausgeführt sein. Somit können je nach Anwendungsfall entweder die gesamte Batterie oder nur einzelne Teile der Batterie markiert werden.

Vorzugsweise erfolgt eine Markierung dadurch, dass ein Wechsel des Zustands des Markierungselements von einem ersten Zustand in einen zweiten Zustand durchgeführt wird. Bspw. ist der erste Zustand ein Normalzustand, insbesondere ein intakter Zustand, und der zweite Zustand ein Fehlerzustand, insbesondere ein zerstörter bzw. defekter Zustand des Markierungselements. Bevorzugt ist dieser Wechsel des Zustands irreversibel, d. h. insbesondere ohne Reparatur oder Austausch des Markierungselements nicht rückgängig zu machen. Bspw. erfolgt dabei die Anpassung des Betreibens der Batteriekomponente dadurch, dass die Batteriekomponente beim Vorliegen des ersten Zustands normal betrieben wird, und/oder beim Vorliegen des zweiten Zustands nicht aktiv betrieben wird (deaktiviert wird). In Abhängigkeit von dem Umfang der Batteriekomponente (diese umfasst bspw. nur eine Batteriezelle oder auch die gesamte Batterie) kann somit zuverlässig die Batterie oder ein Teil davon dauerhaft deaktiviert werden.

Insbesondere wird somit unter dem "Betreiben der Batteriekomponente" verstanden, dass bei einem normalen aktiven Betrieb die Energieversorgung durch die Batteriekomponente und/oder weitere Funktionen der Batteriekomponente, wie ein Aufladen oder Entladen oder auch zeitweises Deaktivieren, durch das BMS normal bereitgestellt werden. Dagegen kann in einem angepassten Betrieb, bspw. beim Vorliegen einer entsprechenden Markierung bzw. eines zweiten Zustands des Markierungselements, die Batteriekomponente vollständig und/oder dauerhaft deaktiviert werden. Wenn die Batteriekomponente dabei nur eine Batteriezelle umfasst, können z. B. weitere Batteriezellen (beim Fehlen einer entsprechenden Markierung bzw. des zweiten Zustands für diese Batteriezellen) normal weiterbetrieben werden.

Ferner kann es im Rahmen der Erfindung vorgesehen sein, dass durch die Markierungsvorrichtung der Zustand des Markierungselements permanent und/oder nicht-flüchtig und/oder irreversibel wechselbar ist, sodass vorzugsweise durch das Markierungselement permanent und/oder nicht-flüchtig und/oder irreversibel eine sicherheitsrelevante Information speicherbar und/oder das Betreiben der Batteriekomponente anpassbar ist. Bevorzugt umfasst dabei die sicherheitsrelevante Information die Information, ob die Batteriekomponente betrieben werden darf oder nicht, d. h. ob ein Defekt vorliegt oder nicht. Bspw. kann beim Detektieren eines Defekts eine Markierung der Batteriekomponente dadurch erfolgen, dass der Wechsel des Zustands des Markierungselements durchgeführt wird. Bspw. kann analog hierzu auch eine Markierung von weiteren Batteriekomponenten durchgeführt werden, welche durch das BMS betrieben werden. Dies hat den Vorteil, dass in einfacher und zuverlässiger Weise die Batteriekomponente(n) dauerhaft deaktivierbar und/oder der Betrieb anpassbar ist (sind).

Ferner ist es denkbar, dass die Batteriekomponente als wenigstens eine Zelle (Batteriezelle) oder als wenigstens ein Zellstack ausgeführt ist und/oder diese aufweist, und vorzugsweise das Markierungselement aufweist. Vorzugsweise können dabei auch weitere Batteriekomponenten vorgesehen sein, bspw. jeweils als (Batterie-) Zellen einer wiederaufladbaren Batterie. Bspw. kann für jede der Batteriekomponenten ein Markierungselement vorgesehen sein. Diese Markierungselemente können bspw. mit einer oder mehreren Markierungsvorrichtung(en) elektrisch verbindbar und/oder verbunden sein, um jeweils einen Wechsel des Zustands der jeweiligen Markierungselemente durchzuführen. Somit kann eine umfassende und zuverlässige Anpassung des Betriebs erfolgen.

Gemäß einer vorteilhaften Weiterbildung der Erfindung kann vorgesehen sein, dass das Markierungselement in einen elektrischen Schaltkreis zum Betreiben und/oder Überwachen der Batteriekomponente integriert ist, sodass vorzugsweise durch den Wechsel des Zustands eine sicherheitsrelevante Information dauerhaft speicherbar und der Batteriekomponente zuordenbar ist. Der elektrische Schaltkreis dient bspw. dazu, einen Betrieb und/oder eine Temperatur und/oder eine Spannung der Batteriekomponente (d. h. ggf. auch mehrerer Batteriekomponenten) zu überwachen, insbesondere zu messen oder zu erfassen. Somit ist ein zuverlässiger Betrieb der Batterie gewährleistbar.

Vorzugsweise kann anhand einer Überwachung der Batteriekomponente (d. h. ggf. auch weiterer Batteriekomponenten) eine Markierungsvoraussetzung, insbesondere eine Übertemperatur und/oder eine Überladung und/oder eine Überspannung und/oder ein erfassbarer Batterieparameter (wie eine Spannung oder ein Strom) außerhalb eines vorbestimmten Normalbereiches und/oder dergleichen, an der Batteriekomponente detektiert werden. Insbesondere können anhand der Überwachung irreparable Schäden der Batteriekomponente detektiert werden. Bspw. kann dann, wenn eine solche Detektion positiv erfolgt, die Markierung der Batteriekomponente durchgeführt werden (d. h. der Wechsel des Zustands durchgeführt werden), um einen weiteren Betrieb der Batteriekomponente anzupassen, insbesondere die Batteriekomponente zu deaktivieren. Damit können zuverlässig Schäden bei der Batterie verhindert werden.

Des Weiteren ist es denkbar, dass das Markierungselement in einen elektrischen Messpfad der Batteriekomponente integriert ist, wobei insbesondere der Messpfad zur Überwachung der Batteriekomponente elektrisch mit dem Batteriemanagementsystem verbindbar ist, wobei vorzugsweise die Markierungsvorrichtung eine Energiequelle, insbesondere Konstantstromquelle, umfasst, welche dazu ausgeführt ist, das Markierungselement für den Wechsel des Zustands elektrisch zu beeinflussen, insbesondere zu zerstören. Zudem kann bspw. eine Messvorrichtung des BMS vorgesehen sein, um elektrische Signale des Messpfads zur Überwachung auszuwerten. Der Messpfad umfasst dabei bspw. Messelemente, wie Sensorelemente und/oder temperaturabhängige Widerstände, z. B. zur Temperatur- und/oder Spannungsmessung. Die Markierungsvorrichtung und/oder die Messvorrichtung kann bspw. über wenigstens eine elektrische Leitung, insbesondere einen Kabelbaum, mit dem Messpfad elektrisch verbunden sein. Bspw. umfasst die Messvorrichtung die Markierungsvorrichtung oder umgekehrt. Das Markierungselement ist dabei bspw. seriell zu den Messelementen im Messpfad integriert, sodass vorzugsweise ein gleicher Strom (insbesondere auch der Energiequelle) sowohl durch die Messelemente als auch durch das Markierungselement fließt. Bspw. kann das Markierungselement auch als ein Messelement ausgestaltet sein, und somit im normalen Betrieb auch eine Messfunktion aufweisen. Dies ermöglicht eine konstruktiv einfache und zuverlässige Markierung.

Ferner ist es denkbar, dass das Markierungselement als ein elektrisches Bauteil ausgeführt ist, welches vorzugsweise ausschließlich zur permanenten Speicherung einer sicherheitsrelevanten Information für die Batteriekomponente ausgeführt ist. Damit ist das Markierungselement insbesondere (auch funktional) separat von weiteren Komponenten, wie Messelementen zur Überwachung, oder einer Messfunktion ausgeführt. Dies hat insbesondere den Vorteil, dass auch nach einer Markierung eine Überwachung weiterhin erfolgen kann.

Gemäß einem weiteren Vorteil kann vorgesehen sein, dass das Markierungselement als eine Thermosicherung und/oder Schmelzsicherung ausgeführt ist, welche durch die Markierungsvorrichtung für den Wechsel des Zustands derart elektrisch beeinflussbar ist, dass das Markierungselement irreversibel auslöst, insbesondere einen Stromkreis der Batteriekomponente unterbricht. Hierzu wird bspw. ein Überstrom durch die Markierungsvorrichtung initiiert, bspw. durch einen Messpfad mit dem Markierungselement. Somit kann in einfacher und kostengünstiger Weise eine Markierung erfolgen.

Ferner kann im Rahmen der Erfindung vorgesehen sein, dass für den Wechsel des Zustands das Markierungselement durch die Markierungsvorrichtung irreversibel zerstörbar ist, wobei vorzugsweise das Markierungselement als ein Halbleiterbauteil und/oder als eine Diode, insbesondere Z-Diode, ausgeführt ist. Somit wird gewährleistet, dass dauerhaft die Markierung vorliegt und den Betrieb der Batteriekomponente beeinflussen kann.

Es ist ferner denkbar, dass das Markierungselement als ein elektronisches Speicherelement ausgeführt ist, sodass vorzugsweise eine sicherheitsrelevante Information durch die Markierungsvorrichtung im Markierungselement durch den Wechsel des Zustands digital speicherbar ist. Dies ermöglicht eine besonders flexible Markierung der Batteriekomponente, welche bspw. auch reversibel ausgeführt sein kann. Somit kann bspw. nach einer Behebung des Defekts der Batteriekomponente die Markierung einfach zurückgesetzt werden. Außerdem können ggf. durch das Speicherelement noch weitere Informationen gleichzeitig in der bzw. für die Batteriekomponente gespeichert werden. Bevorzugt ist dabei eine Platine bei der Batteriekomponente, insbesondere auf dem Zellstack, vorgesehen, wobei das Speicherelement auf der Platine angeordnet ist. Insbesondere erfolgt eine digitale Kommunikation mit dem Speicherelement zur Durchführung des Zustandswechsels.

Bevorzugt kann es möglich sein, dass es sich bei dem Markierungselement um ein (bereits in der Batteriekomponente oder im System zum Betrieb der Batteriekomponente vorhandenes und/oder elektrisches) Bauteil handelt, welches bspw. (originär und/oder primär) bereits eine Funktion aufweist, welche sich von der (sekundären) Funktion zur Markierung unterscheidet. Bspw. kann dann beim Auftreten eines sicherheitskritischen Zustands oder dergleichen dieses Markierungselement, z. B. durch eine Zerstörung des Markierungselements, zur dauerhaften Markierung und/oder Signalisierung des sicherheitskritischen Zustands für das BMS genutzt werden. Mit anderen Worten kann es möglich sein, dass durch den Wechsel des Zustands die originäre Funktion des Markierungselements dauerhaft bzw. irreversibel zerstört wird. Die originäre Funktion kann bspw. eine Funktion zur Temperaturerfassung und/oder Sicherung (wie bei einer Thermosicherung) und/oder Messerfassung und/oder Spannungsregelung bzw. - stabilisierung (wie bei einer Z-Diode) sein.

Ebenfalls Gegenstand der Erfindung ist eine Batteriekomponente mit einem Markierungselement zur dauerhaften Markierung der Batteriekomponente, insbesondere gemäß einem erfindungsgemäßen System. Hierbei ist insbesondere vorgesehen, dass die Batteriekomponente wenigstens einen elektrischen Anschluss zur Verbindung mit einem Batteriemanagementsystem zum Betreiben und/oder Überwachen der Batteriekomponente aufweist, wobei die Markierung der Batteriekomponente dauerhaft und unabhängig von dem Batteriemanagementsystem anhand eines Zustands des Markierungselements speicherbar ist, insbesondere sodass auch nach einem Neustart oder Wechsel des Batteriemanagementsystems der Zustands und/oder die Markierung speicherbar und/oder auslesbar ist. Damit bringt die erfindungsgemäße Batteriekomponente die gleichen Vorteile mit sich, wie sie ausführlich mit Bezug auf ein erfindungsgemäßes System beschrieben worden sind.

Ebenfalls Gegenstand der Erfindung ist ein Verfahren zur dauerhaften Markierung wenigstens einer Batteriekomponente, wobei vorzugsweise die Batteriekomponente wenigstens ein (insbesondere irreversibles) Markierungselement umfasst.

Hierbei ist insbesondere vorgesehen, dass zumindest einer der nachfolgenden Schritte durchgeführt wird, wobei vorzugsweise die Schritte nacheinander oder in beliebiger Reihenfolge durchgeführt werden können, wobei bevorzugt einzelne Schritte auch wiederholt durchgeführt werden können:
- Überwachen der Batteriekomponente (insbesondere durch ein Batteriemanagementsystem) zur Bestimmung wenigstens eines Überwachungsergebnisses,
- Detektieren einer Markierungsvoraussetzung (bspw. eines sicherheitskritischen und/oder reversiblen Zustands) anhand des Überwachungsergebnisses,
- Initiieren eines dauerhaften (insbesondere irreversiblen) Wechsels eines Zustands des Markierungselements, wenn die Markierungsvoraussetzung (positiv) detektiert wird, sodass vorzugsweise das Markierungselement von einem Normalzustand in einen Fehlerzustand wechselt, insbesondere sodass auch nach einem Neustart oder Wechsel des Batteriemanagementsystems der Zustand und/oder die Markierung speicherbar und/oder auslesbar ist,
- Betreiben der Batteriekomponente in Abhängigkeit von dem Zustand des Markierungselements, insbesondere durch ein Batteriemanagementsystem.

Damit bringt das erfindungsgemäße Verfahren die gleichen Vorteile mit sich, wie sie ausführlich mit Bezug auf ein erfindungsgemäßes System und eine erfindungsgemäße Batteriekomponente beschrieben worden sind. Zudem kann das Verfahren geeignet sein, ein erfindungsgemäßes System und/oder eine erfindungsgemäße Batteriekomponente zu betreiben.

Ferner kann im Rahmen der Erfindung vorgesehen sein, dass das Überwachen und/oder Betreiben (der Batteriekomponente) durch ein Batteriemanagementsystem durchgeführt wird, wobei vorzugsweise (zeitlich) vor oder bei dem Betreiben der Zustand des Markierungselements durch eine Markierungsvorrichtung oder Überwachungsvorrichtung des Batteriemanagementsystems ausgelesen wird, insbesondere bei einem Neustart und/oder einer Neuinitiierung und/oder eines Wechsels des Batteriemanagementsystems. Insbesondere kann somit gewährleistet werden, dass vor einem Betrieb der Zustand bewertet wird, und der Betrieb angepasst werden kann.

Optional kann es vorgesehen sein, dass die Markierungsvoraussetzung wenigstens einen sicherheitskritischen, insbesondere reversiblen, Zustand der Batteriekomponente umfasst, vorzugsweise eine vorübergehende Überspannung und/oder vorübergehende Unterspannung und/oder vorübergehende Übertemperatur bei der Batteriekomponente, insbesondere bei einem Zellstack. Insbesondere bei derartigen reversiblen sicherheitskritischen Zuständen ist das Problem, dass nach dem vorübergehenden Auftreten und Vorhandensein der Markierungsvoraussetzung bzw. des sicherheitskritischen Zustands und der Rückkehr zum normalen Zustand der Batteriekomponente die Batteriekomponente wieder "normal" erscheint. Entsprechend kann das BMS ohne Markierung der Batteriekomponente nicht erkennen, dass dieser sicherheitskritische Zustand bereits aufgetreten ist. Dennoch darf die Batteriekomponente nicht weiterverwendet werden, um bspw. eine Beschädigung zu vermeiden. Dies wird durch die Markierung außerhalb des BMS, insbesondere bei erstmaliger Detektion des sicherheitskritischen Zustands, besonders zuverlässig gewährleistet.

Es kann vorgesehen sein, dass die Markierungsvoraussetzung, insbesondere der sicherheitskritische Zustand und/oder als sicherheitskritische Funktion, wenigstens einen der nachfolgenden Zustände und/oder Funktionen umfasst:
- Lebensdauerende der Batteriekomponente,
- Eine Spannung, insbesondere eine Zellspannung, bei der Batteriekomponente unterhalb und/oder oberhalb eines zugelassenen Spannungsbereichs (bspw. eines vorbestimmten Normalbereiches),
- Ein Strom, insbesondere ein Zellenstrom, bei der Batteriekomponente unterhalb und/oder oberhalb eines zugelassenen Strombereichs (bspw. eines vorbestimmten Normalbereiches).

Insbesondere wenn ein Lebensdauerende der Batterie erreicht ist, soll die Batterie außer Betrieb gesetzt werden, um so das Risiko einer Beschädigung zu vermeiden. Die Detektion von Zellspannungen außerhalb eines zugelassenen Bereiches hat ferner den Vorteil, dass zuverlässig Selbstentladungen der Zellen, Entladungen durch das BMS selbst, oder dergleichen erkannt werden können. Somit kann insbesondere eine Tiefenentladung detektiert werden. Zum Tiefenentladeschutz muss dann insbesondere die Batterie bzw. Batteriekomponente (durch die Anpassung des Betreibens) außer Betrieb gesetzt werden, um so ein Wiederaufladen zu verhindern. Dies ist oft auch dann notwendig, wenn sich die Zellspannungen (durch bspw. Erwärmung, Hysterese der Spannung, Erholung der Zellchemie u.s.w.) wieder in den Normalbereich zurück finden. Mit anderen Worten kann hierbei von einem reversiblen sicherheitskritischen Zustand gesprochen werden. Oft ist bei herkömmlichen Systemen das Problem, dass mit einem Wechsel des BMS die Information über das (zumindest erst- und/oder einmalige) Eintreten des sicherheitskritischen Zustands verloren geht. Dies kann durch die dauerhafte Markierung (bzw. dem Wechsel des Zustands) verhindert werden. Insbesondere kann dabei beim Betreiben der Batteriekomponente in Abhängigkeit von dem Zustand des Markierungselements die Batterie bzw. Batteriekomponente permanent und/oder vollständig deaktiviert bleiben.

Insbesondere kann es vorgesehen sein, dass das Initiieren des dauerhaften Wechsels des Zustands des Markierungselements, und/oder das Betreiben der Batteriekomponente in Abhängigkeit von dem Zustand des Markierungselements und/oder der Betrieb nach einem Wechsel des BMS (unter Beibehaltung des gewechselten Zustands) gemäß vordefinierten Anforderungen, insbesondere den Anforderungen und/oder Kriterien einer funktionalen Sicherheit, durchgeführt wird. Insbesondere kommen hierbei Überwachungsmaßnahmen zum Einsatz, um bspw. Fehler während des Betriebs der Batteriekomponente zu detektieren.

Bspw. ist es möglich, dass das Markierungselement als ein elektrisches Bauteil ausgeführt ist, welches auf der Batteriekomponente, insbesondere (ggf. mit) einem Zellstack, implementiert ist. Insbesondere weist dabei das Markierungselement die Eigenschaft auf, bei Initiierung durch das BMS, bspw. bei einem bestimmten vom BMS ausgesendeten Signal, den Zustand zu wechseln. Dies hat den Vorteil, dass dieser neuer Zustand vom gleichen BMS (z. B. auch nach einem Neustart des BMS) oder von einem anderen BMS (z. B. bei einem Wechsel des BMS) ausgelesen werden kann, um eine sicherheitsrelevante Information zu bestimmen. Mit dieser Information kann dann bspw. der weitere sicherheitskritische Gebrauch der Batteriekomponente unterbunden werden.

Vorzugsweise kann das Markierungselement, insbesondere als (Thermo-) Sicherung, in wenigstens einer elektrischen Leitung, insbesondere einem Kabelbaum, implementiert sein. Das Markierungselement und/oder eine solche (Thermo-) Sicherung kann im Normalfall die Funktion haben, auch bei deaktiviertem BMS eine Übertemperatur zu erkennen und dann auszulösen. Beim Start des BMS kann dann so eine vergangene Übertemperatur erkannt werden. Insbesondere kann ein solches Markierungselement für die dauerhafte Markierung genutzt werden, um die Batteriekomponente, insbesondere einen Zellstack, permanent zu markieren. Es kann möglich sein, dass zum Initiieren des Wechsels des Zustands des Markierungselements eine Konstantstromquelle oder dergleichen vorgesehen ist, welche bspw. in einem Messpfad integriert wird. Insbesondere kann dann, wenn eine Markierungsvoraussetzung (bspw. ein kritischer Zustand) detektiert wird, diese Detektion permanent gespeichert werden, indem die Konstantstromquelle genutzt wird. Hierzu kann die Konstantstromquelle bspw. einen Strom durch den Messpfad fließen lassen, welcher über dem Bemessungsstrom des Markierungselements liegt. Insbesondere kann so das Markierungselement als Sicherung auslösen, was durch das BMS deutlich zu erkennen ist, da dann die Messspannung je nach Schaltungstopologie am oberen oder unteren Ende des Messbereichs anschlägt. Nach einem Wechsel des BMS, bspw. aufgrund von Wartung oder Reparatur, kann dann auch ein neues BMS automatisch den Defekt der Sicherung bzw. des Markierungselements und damit die Markierung erkennen und darauf reagieren, bspw. den Betrieb der Batteriekomponente anpassen. Alternativ oder zusätzlich kann das Markierungselement auch als Schmelzsicherung oder Z-Diode oder als Speicherbaustein (Speicherelement) ausgeführt sein. Insbesondere kann bei Verwendung einer Z-Diode der Zustandswechsel dadurch durch das BMS detektiert werden, dass die Z-Diode einen veränderten Leitwert anzeigt.

Weiter ist im Rahmen der Erfindung denkbar, dass nach oder bei dem Detektieren der Markierungsvoraussetzung als eine vorübergehende Markierungsvoraussetzung ein dauerhafter, insbesondere persistenter und/oder nicht-flüchtiger, Wechsel des Zustands des Markierungselements erfolgt, wobei vorzugsweise der Zustand auch nach einem Wechsel eines Batteriemanagementsystems gewechselt bleibt. Damit kann die Sicherheit beim Betrieb der Batteriekomponente deutlich erhöht werden.

Gemäß einer vorteilhaften Weiterbildung der Erfindung kann vorgesehen sein, dass die Batteriekomponente nur dann aktiv betrieben wird, wenn das Markierungselement der Batteriekomponente einen Normalzustand aufweist, wobei bevorzugt der Fehlerzustand einen, insbesondere permanenten und/oder irreparablen, Defekt der Batteriekomponente indiziert, und vorzugsweise bei einem Auslesen des Fehlerzustands die Batteriekomponente deaktiviert wird. Insbesondere erfolgt dabei die Deaktivierung, bevor der Betrieb der Batteriekomponente durch das BMS erfolgt. Hierzu kann das BMS eine entsprechende Konfiguration aufweisen, welche indiziert, dass eine Markierung ausgewertet werden soll.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen jeweils schematisch:
- Fig. 1, 2: eine Darstellung eines erfindungsgemäßen Systems,
- Fig. 3: eine Darstellung eines Batteriemanagementsystems,
- Fig. 4: eine Darstellung zur Visualisierung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

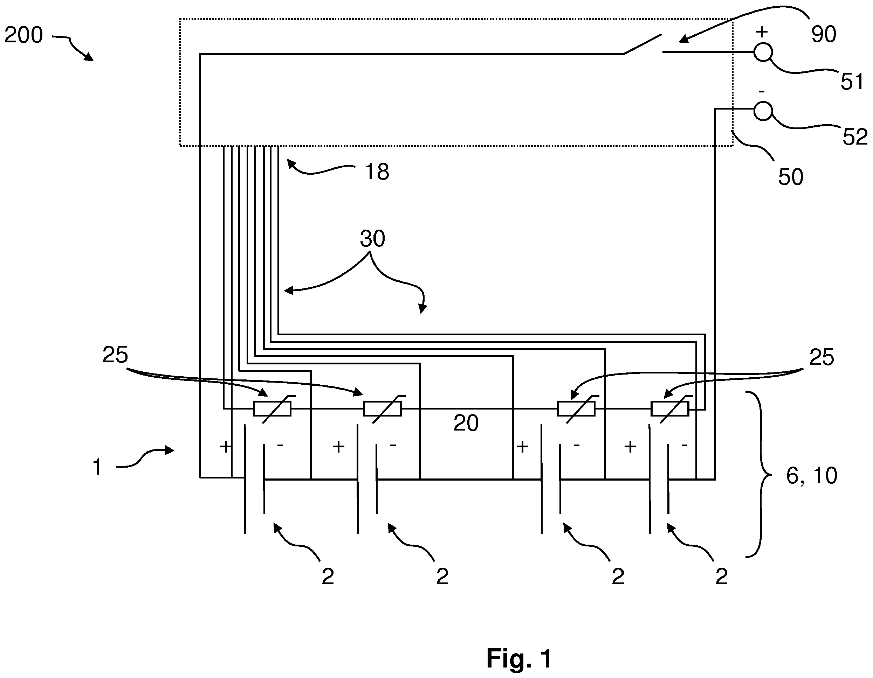

In Figur 1 ist schematisch ein erfindungsgemäßes System 200 dargestellt. Das erfindungsgemäße System 200 umfasst dabei wenigstens ein Batteriemanagementsystem 50 zum Betreiben wenigstens einer Batteriekomponente 10. Die Batteriekomponente 10 kann dabei beispielsweise als zumindest ein Zellstack 6 oder als wenigstens eine Zelle 2 oder auch als eine gesamte Batterie 1 ausgeführt sein und/oder diese aufweisen.

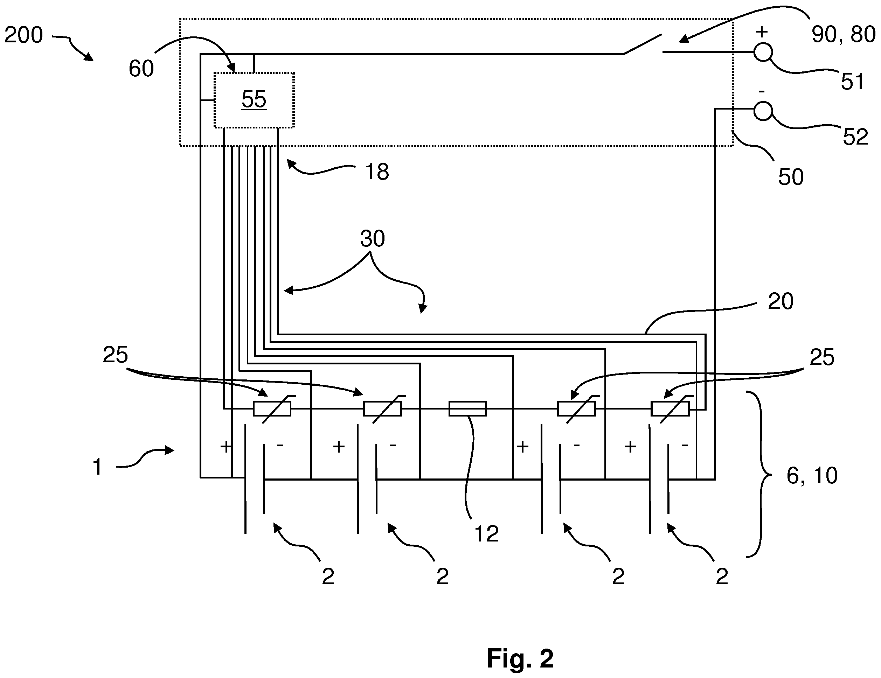

Des Weiteren umfasst das erfindungsgemäße System 200 wenigstens ein Markierungselement 12, wie es insbesondere in Figur 2 dargestellt ist. Insbesondere kann dabei das Markierungselement 12 ein bereits vorhandenes und/oder zusätzliches Bauteil des erfindungsgemäßen Systems 200, vorzugsweise der Batteriekomponente 10, umfassen. Das Markierungselement 12 ist dabei derart ausgestaltet, dass es eine dauerhafte Markierung der Batteriekomponente 10 ermöglicht. Das Markierungselement 12 ist daher außerhalb des Batteriemanagementsystems 50 vorgesehen, sodass ein Betreiben der Batteriekomponente 10 durch das Batteriemanagementsystems 50 dauerhaft durch einen Wechsel des Zustands des Markierungselementes 12 anpassbar ist.

Beispielsweise kann das Markierungselement 12 in einem Messpfad 20 für die Batteriekomponente 10 integriert sein, beispielsweise als Thermosicherung oder dergleichen. Der Messpfad 20 umfasst dabei beispielsweise mehrere Messelemente 25, insbesondere temperaturabhängige Widerstände oder dergleichen. Die Messelemente 25 dienen dabei beispielsweise zur Spannungs- und/oder Temperaturüberwachung bei der Batteriekomponente 10. Insbesondere dienen die Messelemente 25 zur Überwachung zumindest einer jeweiligen Zelle 2 der Batteriekomponente 10. Um dabei die Überwachung und/oder Auswertung der Überwachung, insbesondere Messung, zu ermöglichen, kann das Batteriemanagementsystem 50 beispielsweise über einen Kabelbaum 30 und/oder über wenigstens eine elektrische Leitung mit dem Messpfad 20 verbunden sein. Hierzu kann das Batteriemanagementsystem 50 und/oder die Batteriekomponente 10 (jeweils) z. B. wenigstens einen Anschluss 18 aufweisen. In Abhängigkeit von der Überwachung kann dann beispielsweise, insbesondere beim Vorliegen eines sicherheitskritischen Zustands, eine Trennvorrichtung 90 aktiviert werden. Die Trennvorrichtung 90 ermöglicht dabei beispielsweise die Unterbrechung eines Stromkreises der Batteriekomponente 10.

Wie in Figur 1 und 2 dargestellt ist, wird die Batteriekomponente 10 beispielsweise über eine erste Anschlussstelle 51 und über wenigstens eine zweite Anschlussstelle 52 betrieben, beispielsweise mit einer Last und/oder einem Bordnetz eines Fahrzeuges und/oder dergleichen verbunden. Die erste und zweite Anschlussstelle 51, 52 ermöglichen somit eine Energieübertragung von der Batteriekomponente 10 beispielsweise zur Last. Die Trennvorrichtung 90 ermöglicht es, diese Energieübertragung beispielsweise im Fehlerfall zu unterbinden. Vorzugsweise kann die Trennvorrichtung 90 bei einem Detektieren eines sicherheitskritischen Zustands und insbesondere auch in Abhängigkeit von einem Zustand des Markierungselementes 12 durch eine Ansteuerungsvorrichtung 80 zur Unterbindung der Energieübertragung angesteuert werden. Die Ansteuerungsvorrichtung 80 ist dabei beispielsweise Teil des Batteriemanagementsystems 50.

Weiter ist in Figur 2 dargestellt, dass das Batteriemanagementsystem 50 gegebenenfalls eine Markierungsvorrichtung 60, insbesondere mit einer Energiequelle 55, aufweisen kann. Insbesondere ist dabei die Markierungsvorrichtung 60 elektrisch mit dem Markierungselement 12 derart verbunden, dass durch die Markierungsvorrichtung 60 ein dauerhafter Wechsel des Zustands des Markierungselementes 12 durchführbar ist. Dies kann beispielsweise durch eine Bereitstellung eines Stromes durch die Markierungsvorrichtung 60, insbesondere durch die Energiequelle 55, im Messpfad 20 erfolgen. Insbesondere liegt dabei dieser Strom über einem Bemessungsstrom des Markierungselementes 12. Dies führt insbesondere zur Zerstörung des Markierungselementes 12, sodass eine dauerhafte Markierung zur Initiierung des sicherheitskritischen Zustands möglich ist.

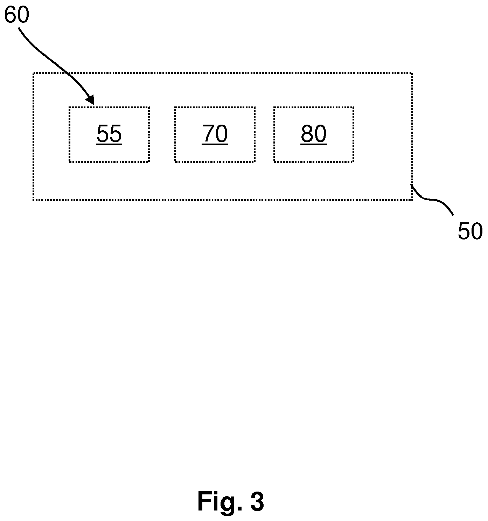

In Figur 3 ist das Batteriemanagementsystem 50 schematisch mit weiteren Details dargestellt. Dabei ist erkennbar, dass das Batteriemanagementsystem 50 zumindest eine Markierungsvorrichtung 60, gegebenenfalls mit wenigstens einer Energiequelle 55, aufweist. Weiter kann das Batteriemanagementsystem 50 zumindest eine Überwachungsvorrichtung 70 und/oder zumindest eine Ansteuerungsvorrichtung 80 umfassen.

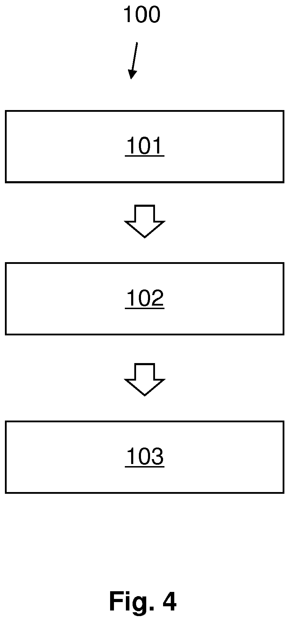

In Figur 4 ist schematisch ein erfindungsgemäßes Verfahren 100 visualisiert. Dabei erfolgt gemäß einem ersten Verfahrensschritt 101 ein Überwachen einer Batteriekomponente 10 zur Bestimmung wenigstens eines Überwachungsergebnisses. Gemäß einem zweiten Verfahrensschritt 102 erfolgt ein Detektieren einer Markierungsvoraussetzung anhand des Überwachungsergebnisses. Gemäß einem dritten Verfahrensschritt 103 erfolgt ein Initiieren eines dauerhaften Wechsels eines Zustands eines Markierungselementes 12, wenn die Markierungsvoraussetzung detektiert wird, sodass das Markierungselement 12 von einem Normalzustand in einen Fehlerzustand wechselt.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezuaszeichenliste

- 1: Batterie
- 2: Zelle
- 6: Zellstack

- 10: Batteriekomponente
- 12: Markierungselement
- 18: Anschluss
- 20: Messpfad
- 25: Messelement
- 30: Kabelbaum

- 50: Batteriemanagementsystem
- 51: erste Anschlussstelle
- 52: zweite Anschlussstelle
- 55: Energiequelle

- 60: Markierungsvorrichtung
- 70: Überwachungsvorrichtung
- 80: Ansteuerungsvorrichtung
- 90: Trennvorrichtung

- 100: Verfahren

- 200: System

## Patentansprüche

1. System (200) zur dauerhaften Markierung wenigstens einer Batteriekomponente (10), aufweisend:
- wenigstens ein Markierungselement (12), welches der Batteriekomponente (10) zugeordnet ist,
- ein Batteriemanagementsystem (50) zum Betreiben der Batteriekomponente (10) in Abhängigkeit von einem Zustand des Markierungselements (12),
- wenigstens eine Markierungsvorrichtung (60), welche elektrisch mit dem Markierungselement (12) derart verbindbar ist, dass durch die Markierungsvorrichtung (60) ein dauerhafter Wechsel des Zustands des Markierungselements (12) durchführbar ist,
wobei das Markierungselement (12) außerhalb des Batteriemanagementsystems (50) vorgesehen ist, sodass das Betreiben der Batteriekomponente (10) dauerhaft durch den Wechsel des Zustands anpassbar ist, wobei
durch die Markierungsvorrichtung (60) der Zustand des Markierungselements (12) irreversibel wechselbar ist, sodass durch das Markierungselement (12) irreversibel eine sicherheitsrelevante Information speicherbar und/oder das Betreiben der Batteriekomponente (10) anpassbar ist, wobei
die Batteriekomponente (10) wenigstens eine Zelle (2) umfasst, und das Markierungselement (12) aufweist, wobei
das Markierungselement (12) in einen elektrischen Messpfad (20) der Batteriekomponente (10) integriert ist, wobei der Messpfad (20) zur Überwachung der Batteriekomponente (10) elektrisch mit dem Batteriemanagementsystem (50) verbindbar ist, wobei die Markierungsvorrichtung (60) eine Energiequelle (55) umfasst, welche dazu ausgeführt ist, das Markierungselement (12) für den Wechsel des Zustands elektrisch zu zerstören.

2. System (200) nach Anspruch 1,
**dadurch gekennzeichnet,**
**dass** durch die Markierungsvorrichtung (60) der Zustand des Markierungselements (12) permanent und/oder nicht-flüchtig wechselbar ist, sodass durch das Markierungselement (12) permanent und/oder nicht-flüchtig die sicherheitsrelevante Information speicherbar und/oder das Betreiben der Batteriekomponente (10) anpassbar ist.

3. System (200) nach Anspruch 1 oder 2,
**dadurch gekennzeichnet,**
**dass** die Batteriekomponente (10) einen Zellstack (6), umfasst.

4. System (200) nach einem der vorhergehenden Ansprüche,
**dadurch gekennzeichnet,**
**dass** das Markierungselement (12) in einen elektrischen Schaltkreis zum Betreiben und/oder Überwachen der Batteriekomponente (10) integriert ist, sodass durch den Wechsel des Zustands eine sicherheitsrelevante Information dauerhaft speicherbar und der Batteriekomponente (10) zuordenbar ist.

5. System (200) nach einem der vorhergehenden Ansprüche,
**dadurch gekennzeichnet,**
**dass** die Markierungsvorrichtung (60) die Energiequelle (55), nämlich eine Konstantstromquelle, umfasst, welche dazu ausgeführt ist, das Markierungselement (12) für den Wechsel des Zustands elektrisch zu beeinflussen, insbesondere zu zerstören.

6. System (200) nach einem der vorhergehenden Ansprüche,
**dadurch gekennzeichnet,**
**dass** das Markierungselement (12) als ein elektrisches Bauteil ausgeführt ist, welches vorzugsweise nach dem Wechsel des Zustands ausschließlich zur permanenten Speicherung einer sicherheitsrelevanten Information für die Batteriekomponente (10) ausgeführt ist.

7. System (200) nach einem der vorhergehenden Ansprüche,
**dadurch gekennzeichnet,**
**dass** das Markierungselement (12) als eine Thermosicherung und/oder Schmelzsicherung ausgeführt ist, welche durch die Markierungsvorrichtung (60) für den Wechsel des Zustands derart elektrisch beeinflussbar ist, dass das Markierungselement (12) irreversibel auslöst, insbesondere einen Stromkreis der Batteriekomponente (10) unterbricht.

8. System (200) nach einem der vorhergehenden Ansprüche,
**dadurch gekennzeichnet,**
**dass** für den Wechsel des Zustands das Markierungselement (12) durch die Markierungsvorrichtung (60) irreversibel zerstörbar ist, wobei vorzugsweise das Markierungselement (12) als ein Halbleiterbauteil und/oder als eine Diode, insbesondere Z-Diode, ausgeführt ist.

9. System (200) nach einem der vorhergehenden Ansprüche,
**dadurch gekennzeichnet,**
**dass** das Markierungselement (12) als ein elektronisches Speicherelement ausgeführt ist, sodass eine sicherheitsrelevante Information durch die Markierungsvorrichtung (60) im Markierungselement (12) durch den Wechsel des Zustands digital speicherbar ist.

10. Batteriekomponente (10) mit einem Markierungselement (12) zur dauerhaften Markierung
der Batteriekomponente (10), gemäß einem System (200) nach einem der vorhergehenden Ansprüche, wobei
die Batteriekomponente (10) wenigstens einen elektrischen Anschluss (18) zur Verbindung mit einem Batteriemanagementsystem (50) zum Betreiben und/oder Überwachen der Batteriekomponente (10) aufweist, wobei
die Markierung der Batteriekomponente (10) dauerhaft und unabhängig von dem Batteriemanagementsystem (50) anhand eines Zustands des Markierungselements (12) speicherbar ist.

11. Verfahren (100) zur dauerhaften Markierung wenigstens einer Batteriekomponente (10), wobei die Batteriekomponente (10) wenigstens ein Markierungselement (12) umfasst, **gekennzeichnet durch die nachfolgenden Schritte:**
- Überwachen der Batteriekomponente (10) zur Bestimmung wenigstens eines Überwachungsergebnisses,
- Detektieren einer Markierungsvoraussetzung anhand des Überwachungsergebnisses,
- Initiieren eines dauerhaften Wechsels eines Zustands des Markierungselements (12), wenn die Markierungsvoraussetzung detektiert wird, sodass das Markierungselement (12) von einem Normalzustand in einen Fehlerzustand wechselt,
- Betreiben der Batteriekomponente (10) in Abhängigkeit von dem Zustand des Markierungselements (12),
wobei bei oder nach dem Detektieren der Markierungsvoraussetzung als eine vorübergehende Markierungsvoraussetzung ein dauerhafter Wechsel des Zustands des Markierungselements (12) erfolgt, wobei der Zustand auch nach einem Wechsel eines Batteriemanagementsystems (50) gewechselt bleibt.

12. Verfahren (100) nach Anspruch 11,
**dadurch gekennzeichnet,**
**dass** das Überwachen und/oder Betreiben der Batteriekomponente (10) durch ein Batteriemanagementsystem (50) durchgeführt wird, wobei vor oder bei dem Betreiben der Zustand des Markierungselements (12) durch eine Markierungsvorrichtung (60) oder Überwachungsvorrichtung (70) des Batteriemanagementsystems (50) ausgelesen wird, insbesondere bei einem Neustart und/oder einer Neuinitiierung und/oder eines Wechsels des Batteriemanagementsystems (50).

13. Verfahren (100) nach Anspruch 11 oder 12,
**dadurch gekennzeichnet,**
**dass** die Markierungsvoraussetzung wenigstens einen sicherheitskritischen, insbesondere reversiblen, Zustand der Batteriekomponente (10) umfasst, vorzugsweise eine vorrübergehende Überspannung und/oder Unterspannung und/oder Übertemperatur bei der Batteriekomponente (10), insbesondere bei einem Zellstack.

14. Verfahren (100) nach einem der Ansprüche 11 bis 13,
**dadurch gekennzeichnet,**
**dass** bei oder nach dem Detektieren der Markierungsvoraussetzung als die vorübergehende Markierungsvoraussetzung der dauerhafte, nämlich persistenter und/oder nicht-flüchtiger, Wechsel des Zustands des Markierungselements (12) erfolgt.

15. Verfahren (100) nach einem der Ansprüche 11 bis 14,
**dadurch gekennzeichnet,**
**dass** die Batteriekomponente (10) nur dann aktiv betrieben wird, wenn das Markierungselement (12) der Batteriekomponente (10) den Normalzustand aufweist, wobei der Fehlerzustand einen, insbesondere permanenten und/oder irreparablen, Defekt der Batteriekomponente (10) indiziert, und vorzugsweise bei einem Auslesen des Fehlerzustands die Batteriekomponente (10) deaktiviert wird.

16. Verfahren (100) nach einem der Ansprüche 11 bis 15,
**dadurch gekennzeichnet,**
**dass** ein System (200) nach einem der Ansprüche 1 bis 9 und/oder eine Batteriekomponente (10) nach Anspruch 10 betrieben wird.

## Claims

1. A system (200) for permanently marking at least one battery component (10), comprising:
- at least one marking element (12) associated with the battery component (10),
- a battery management system (50) for operating the battery component (10) in response to a condition of the marking element (12),
- at least one marking device (60) which can be electrically connected to the marking element (12) in such a way that a permanent change of the state of the marking element (12) can be carried out by the marking device (60),
wherein the marking element (12) is provided outside the battery management system (50) so that the operation of the battery component (10) is permanently adaptable by the change of the state, wherein the state of the marking element (12) is irreversibly changeable by the marking device (60) so that a safety-relevant information is irreversibly storable and/or the operation of the battery component (10) is adaptable by the marking element (12), wherein the battery component (10) comprises at least one cell (2) and has the marking element (12), wherein the marking element (12) is integrated into an electrical measurement path (20) of the battery component (10), wherein the measurement path (20) is electrically connectable to the battery management system (50) for monitoring the battery component (10), wherein the marking device (60) comprises an energy source (55) which is designed to electrically destroy the marking element (12) for the change of state.

2. System (200) according to claim 1,
**characterized in that**
by means of the marking device (60) the state of the marking element (12) is permanently and/or non-volatile changeable, so that by means of the marking element (12) the safety-relevant information is permanently and/or non-volatile storable and/or the operation of the battery component (10) is adaptable.

3. System (200) according to claim 1 or 2,
**characterized in that**
the battery component (10) comprises a cell stack (6).

4. System (200) according to any one of the preceding claims,
**characterized in that**
the marking element (12) is integrated into an electrical circuit for operating and/or monitoring the battery component (10), so that, as a result of the change of state, safety-relevant information can be stored permanently and can be assigned to the battery component (10).

5. System (200) according to any one of the preceding claims,
**characterized in that**
the marking device (60) comprises the energy source (55), namely a constant current source, which is designed to electrically influence, in particular destroy, the marking element (12) for the change of state.

6. System (200) according to any one of the preceding claims,
**characterized in that**
the marking element (12) is designed as an electrical component which, preferably after the change of state, is designed exclusively for the permanent storage of safety-relevant information for the battery component (10).

7. System (200) according to any one of the preceding claims,
**characterized in that**
the marking element (12) is designed as a thermal fuse and/or fusible link which can be electrically influenced by the marking device (60) for the change of state in such a way that the marking element (12) trips irreversibly, in particular interrupts a circuit of the battery component (10).

8. System (200) according to any one of the preceding claims,
**characterized in that**
for the change of state, the marking element (12) can be irreversibly destroyed by the marking device (60), the marking element (12) preferably being designed as a semiconductor component and/or as a diode, in particular a Z-diode.

9. System (200) according to any one of the preceding claims,
**characterized in that**
the marking element (12) is designed as an electronic memory element, so that safety-relevant information can be stored digitally by the marking device (60) in the marking element (12) by the change of state.

10. Battery component (10) having a marking element (12) for permanently marking the battery component (10), according to a system (200) according to one of the preceding claims, wherein the battery component (10) has at least one electrical connection (18) for connection to a battery management system (50) for operating and/or monitoring the battery component (10), wherein the marking of the battery component (10) can be stored permanently and independently of the battery management system (50) on the basis of a state of the marking element (12).

11. A method (100) for permanently marking at least one battery component (10), wherein the battery component (10) comprises at least one marking element (12),
**characterized by the following steps:**
- Monitoring the battery component (10) to determine at least one monitoring result,
- Detecting a marking requirement based on the monitoring result,
- Initiating a permanent change of a state of the marking element (12) when the marking condition is detected, such that the marking element (12) changes from a normal state to an error state,
- Operating the battery component (10) in response to the condition of the marking element (12),
wherein upon or after detecting the marking requirement as a temporary marking requirement, a permanent change of state of the marking element (12) occurs, wherein the state remains changed even after a change of a battery management system (50).

12. The method (100) according to claim 11,
**characterized in that**
the monitoring and/or operation of the battery component (10) is carried out by a battery management system (50), the state of the marking element (12) being read out by a marking device (60) or monitoring device (70) of the battery management system (50) before or during operation, in particular during a restart and/or a reinitiation and/or a change of the battery management system (50).

13. Method (100) according to claim 11 or 12,
**characterized in that**
the marking requirement comprises at least one safety-critical, in particular reversible, state of the battery component (10), preferably a temporary overvoltage and/or undervoltage and/or overtemperature in the battery component (10), in particular in a cell stack.

14. The method (100) according to any one of claims 11 to 13,
**characterized in that**
upon or after the detection of the marking requirement as the temporary marking requirement, the permanent, namely persistent and/or non-volatile, change of state of the marking element (12) takes place.

15. The method (100) according to any one of claims 11 to 14,
**characterized in that**
the battery component (10) is only actively operated when the marking element (12) of the battery component (10) has the normal state, the error state indicating a defect, in particular a permanent and/or irreparable defect, in the battery component (10), and preferably the battery component (10) is deactivated when the fault state is read out.

16. The method (100) according to any one of claims 11 to 15,
**characterized in that**
a system (200) according to any one of claims 1 to 9 and/or a battery component (10) according to claim 10 is operated.

## Revendications

1. Système (200) pour marquer de manière permanente au moins un composant de batterie (10), comprenant :
- au moins un élément de marquage (12), qui est associé au composant de batterie (10),
- un système de gestion de batterie (50) pour faire fonctionner le composant de batterie (10) en fonction d'un état de l'élément de marquage (12),
- au moins un dispositif de marquage (60), qui peut être relié électriquement à l'élément de marquage (12) de telle sorte qu'un changement permanent de l'état de l'élément de marquage (12) peut être réalisé par le dispositif de marquage (60),
l'élément de marquage (12) étant prévu à l'extérieur du système de gestion de batterie (50), de sorte que le fonctionnement du composant de batterie (10) peut être adapté de manière durable par le changement d'état, l'état de l'élément de marquage (12) pouvant être changé de manière irréversible par le dispositif de marquage (60), de sorte qu'une information importante pour la sécurité peut être mémorisée de manière irréversible par l'élément de marquage (12) et/ou le fonctionnement du composant de batterie (10) peut être adapté, dans lequel le composant de batterie (10) comprend au moins une cellule (2) et présente l'élément de marquage (12), dans lequel l'élément de marquage (12) est intégré dans un chemin de mesure électrique (20) du composant de batterie (10), dans lequel le chemin de mesure (20) peut être relié électriquement au système de gestion de batterie (50) pour surveiller le composant de batterie (10), dans lequel le dispositif de marquage (60) comprend une source d'énergie (55) qui est conçue pour détruire électriquement l'élément de marquage (12) pour le changement d'état.

2. Système (200) selon la revendication 1,
**caractérisé en ce que**
l'état de l'élément de marquage (12) peut être changé de manière permanente et/ou non volatile par le dispositif de marquage (60), de sorte que l'information relative à la sécurité peut être mémorisée de manière permanente et/ou non volatile par l'élément de marquage (12) et/ou le fonctionnement du composant de batterie (10) peut être adapté.

3. Système (200) selon la revendication 1 ou 2,
**caractérisé en ce que**
le composant de batterie (10) comprend une pile de cellules (6).

4. Système (200) selon l'une quelconque des revendications précédentes,
**caractérisé en ce que**
l'élément de marquage (12) est intégré dans un circuit électrique pour le fonctionnement et/ou la surveillance du composant de batterie (10), de sorte qu'une information importante pour la sécurité peut être mémorisée durablement par le changement d'état et peut être attribuée au composant de batterie (10).

5. Système (200) selon l'une quelconque des revendications précédentes,
**caractérisé en ce que**
le dispositif de marquage (60) comprend la source d'énergie (55), à savoir une source de courant constant, qui est adaptée pour influencer électriquement l'élément de marquage (12) pour le changement d'état, notamment pour le détruire.

6. Système (200) selon l'une quelconque des revendications précédentes,
**caractérisé en ce que**
l'élément de marquage (12) est réalisé sous la forme d'un composant électrique qui est réalisé de préférence après le changement d'état exclusivement pour la mémorisation permanente d'une information importante pour la sécurité pour le composant de batterie (10).

7. Système (200) selon l'une quelconque des revendications précédentes,
**caractérisé en ce que**
l'élément de marquage (12) est réalisé sous la forme d'un fusible thermique et/ou d'un fusible à fusion, qui peut être influencé électriquement par le dispositif de marquage (60) pour le changement d'état de telle sorte que l'élément de marquage (12) se déclenche de manière irréversible, en particulier interrompt un circuit électrique du composant de batterie (10).

8. Système (200) selon l'une quelconque des revendications précédentes,
**caractérisé en ce que**
pour le changement d'état, l'élément de marquage (12) peut être détruit de manière irréversible par le dispositif de marquage (60), l'élément de marquage (12) étant réalisé de préférence sous la forme d'un composant semi-conducteur et/ou d'une diode, notamment d'une diode Z.

9. Système (200) selon l'une quelconque des revendications précédentes,
**caractérisé en ce que**
l'élément de marquage (12) est réalisé sous la forme d'un élément de mémoire électronique, de sorte qu'une information importante pour la sécurité peut être mémorisée numériquement par le dispositif de marquage (60) dans l'élément de marquage (12) par le changement d'état.

10. Composant de batterie (10) avec un élément de marquage (12) pour le marquage durable du composant de batterie (10), selon un système (200) selon l'une des revendications précédentes, le composant de batterie (10) présentant au moins une connexion électrique (18) pour la liaison avec un système de gestion de batterie (50) pour le fonctionnement et/ou la surveillance du composant de batterie (10), le marquage du composant de batterie (10) pouvant être mémorisé durablement et indépendamment du système de gestion de batterie (50) à l'aide d'un état de l'élément de marquage (12).

11. Procédé (100) de marquage permanent d'au moins un composant de batterie (10), dans lequel le composant de batterie (10) comprend au moins un élément de marquage (12), **caractérisé par les étapes suivantes:**
- Surveiller le composant de batterie (10) pour déterminer au moins un résultat de surveillance,
- Détection d'une condition de marquage à partir du résultat de la surveillance,
- L'initiation d'un changement permanent d'un état de l'élément de marquage (12) lorsque la condition de marquage est détectée, de sorte que l'élément de marquage (12) passe d'un état normal à un état de défaut,
- Faire fonctionner le composant de batterie (10) en fonction de l'état de l'élément de marquage (12),
dans lequel, lors de ou après la détection de la condition de marquage en tant que condition de marquage temporaire, un changement permanent de l'état de l'élément de marquage (12) est effectué, l'état restant changé même après un changement d'un système de gestion de batterie (50).

12. Procédé (100) selon la revendication 11,
**caractérisé en ce que**
la surveillance et/ou l'exploitation du composant de batterie (10) est effectuée par un système de gestion de batterie (50), l'état de l'élément de marquage (12) étant lu avant ou lors de l'exploitation par un dispositif de marquage (60) ou un dispositif de surveillance (70) du système de gestion de batterie (50), en particulier lors d'un redémarrage et/ou d'une nouvelle initiation et/ou d'un changement du système de gestion de batterie (50).

13. Procédé (100) selon la revendication 11 ou 12,
**caractérisé en ce que**
la condition de marquage comprend au moins un état critique pour la sécurité, en particulier réversible, du composant de batterie (10), de préférence une surtension et/ou une sous-tension et/ou une surtempérature passagères dans le composant de batterie (10), en particulier dans une pile de cellules.

14. Procédé (100) selon l'une quelconque des revendications 11 à 13,
**caractérisé en ce que**
lors de la détection ou après la détection de la condition de marquage en tant que condition de marquage temporaire, le changement durable, à savoir persistant et/ou non volatil, de l'état de l'élément de marquage (12) a lieu.

15. Procédé (100) selon l'une quelconque des revendications 11 à 14,
**caractérisé en ce que**
le composant de batterie (10) n'est exploité activement que lorsque l'élément de marquage (12) du composant de batterie (10) présente l'état normal, l'état de défaut indiquant un défaut, en particulier permanent et/ou irréparable, du composant de batterie (10), et de préférence, lors d'une lecture de l'état de défaut, le composant de batterie (10) est désactivé.

16. Procédé (100) selon l'une quelconque des revendications 11 à 15,
**caractérisé en ce qu'**
un système (200) selon l'une des revendications 1 à 9 et/ou un composant de batterie (10) selon la revendication 10 est exploité.
